# EUROPEAN PATENT APPLICATION

(11) **EP 2 301 883 A1**
(43) Date of publication of application: **30.03.2011**
(21) Application number: 09425381.2
(22) Date of filing: 28.09.2009
(51) Int. Cl.: B66F 11/04, F16M 11/26, G08G 1/09

(54) **Method for filming including an automatic jib crane for videocamera and a remote computerized control**

(71) Applicant: Flying srl, 20121 Milaon (IT)
(72) Inventor: Modugno, Matteo, 21010 Ferno (VA) (IT)

(57) **Abstract**

Mechanical support for videocameras (6), it is mainly composed by a main telescopic arm (1) or jib, that can consist in two or more elements, the telescopic arm can also rotates 360° around its axis. Two perpendicular secondary fixed jibs (3) branch off from the main arm, the secondary jibs sustain other two perpendicular little fixed jibs. Between these ulterior fixed jibs is mounted a revolving arm on which is mounted the videocamera (6). All the movements of mobile parts of the present invention are wireless controlled by a remote pan.

## Description

### Application field

The present invention concerns a professional support for videocameras. From the beginning of cinema the problem of supports for videocameras has been very important. By now there are a great number of accessories for videocameras aiming to facilitate videocamera users. For example there are a great variety of tripods, jibs, cranes, dollies and other supports and devices as steadicams. The problem is that according to the kind of shot it is necessary a different device or support. Therefore, usually,-videocamera supports are partially manually handled, it means that they aren't versatile if it is necessary to change completely shot, it's the case of a 360° rotation. The main restrictions of the supports for videocamera are the following:
- Tripods: they ensure videocamera stability but are not versatile and the object to be filmed must be almost a fixed one.
- Cranes: usually they are heavy, bulky and expensive. Usually they move rather slowly because of their heavy components.
- Jibs: They are very versatile and can change position very quickly. But they need to be mounted on a crane for filming high placed object and they are usually manually handled, it means that in the case of a 360° videocamera rotation the user must rotate with the camera.

### Brief description

The present invention consists in a mechanical support for videocameras, it is mainly composed by a main telescopic arm or jib, that can consist in two or more elements, the telescopic arm can also rotates 360° around its axis. Two perpendicular secondary fixed jibs branch off from the main arm, the secondary jibs sustain other two perpendicular little fixed jibs. Between these ulterior fixed jibs is mounted a revolving arm on which is mounted the videocamera. All the movements of mobile parts of the present invention are wireless controlled by a remote pan.

### Brief description of drawing

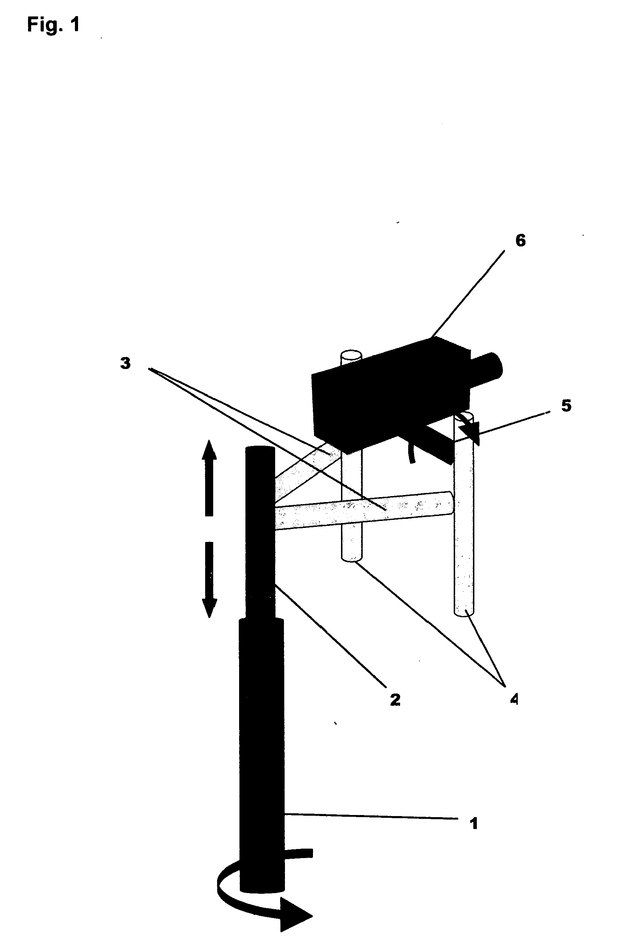

In figure 1 is shown an embodiment of the invention:
Fig.1 (1): It is the main telescopic arm. It can rotates 360° around its axis.
Fig. 1 (2): The shifting element of the main telescopic arm, telescopic shifting elements can be two or more if it is necessary.
Fig. 1 (3): The secondary perpendicular fixed jibs which branch off from the main arm, they are fixed and can't move.
Fig. 1 (4): The ulterior perpendicular fixed jibs.
Fig. 1 (5): The revolving arm
Fig. 1 (6): The videocamera, fixed on the revolving arm

### Detailed Description

The videocamera support consists in a main telescopic arm 1, this arm can rotates 360° around its vertical axis. The shifting element of the main telescopic arm 2 allows to reach high position, eventually more shifting elements can be added. Two perpendicular secondary fixed jibs 3 branch off from the shifting element of the main arm. These jibs are fixed and don't move, they can only go up and down according with the movement of the shifting element of the main telescopic arm. The secondary jibs sustain other two perpendicular little fixed jibs 4. Between these ulterior fixed jibs is mounted a revolving arm 5 on which is mounted the videocamera 6. The videocamera can easily films almost every place of the set: The telescopic arm ensures to reach an higher position for the camera if it's necessary. Therefore the main arm can rotates so that the camera can be pointed all around the support. Finally the revolving arm on wich is mounted the camera allows to point the camera itself up and down according to desired shot. These three simple movements allows the videocamera to take every possible shot on the set. Thank to the modern technologies the support can be completely controlled by remote wireless control mounted on an electronic pan. The user can check on a screen the shot of the camera to adjust continuosly the position of the videocamera itself. Eventually the movement of the camera can be planned by a software recording the number and the excursion of the three basic movements. In this way it's possible to use a set of of patterns of pre-recorded movements.

Eventually the mechanical support can be mounted on a "dolly". A camera dolly is a specialized piece of film equipment designed to create smooth camera movements. The camera is mounted to the dolly and the camera operator and camera assistant usually ride on it to operate the camera. The dolly is operated by a dolly grip who is a dedicated technician trained in its use.

The proportion of the jibs and arms showed in fig. 1 are merely approximate. The real proportion depends on the specific needs of the user.

The device to fix the videocamera on the revolving arm is not strictly related to the present invention, it may change according to videocamera weight and to videocamera shape.

The same can be said for what concerns the power supply of the electronic mechanical support. They too will be ideated accordine to specific needs of operator and circumstances.

## Claims

1. A method for filming including an automatic jib crane for videocamera and a remote computerized control. **Characterized in the fact that** consists in a main telescopic arm or jib which can rotates 360° around its axis. Two perpendicular secondary fixed jibs branch off from the main arm, the secondary jibs sustain other two perpendicular little fixed jibs. Between these ulterior fixed jibs is mounted a revolving arm on which is mounted the videocamera.

2. A method for filming including an automatic jib crane for videocamera and a remote computerized control as claimed in claim 1, **characterized in the fact that** all the mobile elements are controlled by a remote wireless control.

3. A method for filming including an automatic jib crane for videocamera and a remote computerized control as claimed in claim 1, **characterized in the fact that** all the movements can be recorded and planned electronically.
